# EUROPEAN PATENT APPLICATION

(11) **EP 2 770 365 A1**
(43) Date of publication of application: **27.08.2014**
(21) Application number: 12873469.6
(22) Date of filing: 26.04.2012
(51) Int. Cl.: G02B 27/22

(54) **LED-BASED DOUBLE-FACED GRATING THREE-DIMENSIONAL DISPLAY DEVICE AND MANUFACTURING METHOD THEREOF**

(30) Priority: 31.03.2012 CN 201210094884
(71) Applicant: Fuzhou University, Fuzhou, Fujian 350002 (CN)
(72) Inventor: ZHANG, Yongai, Fuzhou Fujian 350001 (CN); GUO, Tailiang, Fuzhou Fujian 350001 (CN); ZHOU, Xiongtu, Fuzhou Fujian 350001 (CN); YE, Yun, Fuzhou Fujian 350001 (CN); LIN, Zhixian, Fuzhou Fujian 350001 (CN); YAO, Jianmin, Fuzhou Fujian 350001 (CN); LIN, Jintang, Fuzhou Fujian 350001 (CN); HU, Liqin, Fuzhou Fujian 350001 (CN); HU, Hailong, Fuzhou Fujian 350001 (CN); XU, Sheng, Fuzhou Fujian 350001 (CN); ZENG, Xiangyao, Fuzhou Fujian 350001 (CN); YANG, Qian, Fuzhou Fujian 350001 (CN)
(74) Representative: Decamps, Alain René François
(86) International application number: PCT/CN2012/074719
(87) International publication number: WO 2013/143199

(57) **Abstract**

A stereoscopic LED display with dual barrier, comprising:
A LED display panel (110);
A heat shield (120), placed in front of the LED light-emitting surface;
A dual barrier (130), comprising the first barrier (102, 202, 302) and the second barrier (105, 205, 305), the first barrier (102, 202, 302) placed in front of the heat shield, making the centers of the LED sub-pixels on the same levels laterally and longitudinally, the second barrier (105, 205, 305) placed ahead of the first barrier (102, 202, 302) for the stereoscopic light splitting;
A protection layer (140) placed ahead of the second barrier (105, 205, 305).

## Description

### Technical Field

This invention relates to auto-stereoscopic display, especially for a stereoscopic LED display with dual barrier.

### Technical Background of the invention

Naked-eye three-dimensional (3D) display becomes the research focus in the display area because one can watch the 3D images display needless of other visual equipment such as glasses or helmets. Naked-eye 3D display based on parallax barrier has attracted much attention because of its simplicity in structure, low cost and compatibility with 2D display panel. Furthermore, one can fabricate the barrier with different specifications by modifying the widths of the transparent and opaque areas according to the actual need, as well as to realize large scale 3D display panel by adapting the splicing technology.

With the development of photo-electronic technology, LED display technology has gained widely applications. LED display technology has the advantages of high brightness, environmental friendly and energy efficient, high responsibility, impact resistance and stable performance, etc. As display panel, LED is widely used in the display boards and advertising boards, where large size and high brightness are needed. Moreover, the LED panels can be spliced to obtain panel with different sizes, shapes and resolution, which has irreplaceable advantages in the areas of advertising, culture, entertainment, scientific research and education.

However, the LED panel is composed of many LED sub-pixels or units, in the splicing of LED panel, it is difficult to align the LED sub-pixels or the LED units absolutely on the same level both in the lateral and longitudinal directions. That is, the LED sub-pixels or units might be tilt, distort in the lateral and longitudinal directions, or uneven entire impact in the surface, lead to the alignment difficulties of the barrier, hindering the development of autostereoscopic LED display.

To overcome the alignment difficulties of the LED sub-pixels or the LED units, this invention presents the stereoscopic LED display with dual barrier.

### Summary of the Invention

The purpose of this invention is to provide a stereoscopic LED display with dual barrier and the fabrication processes to overcome the alignment difficulties of the LED sub-pixels or the LED units. This device needs simple manufacturing process with low cost.

To achieve the purposes mentioned above, this invention adopts the following proposal: a stereoscopic LED display with dual barrier, comprising:
A LED display panel;
A heat shield, placed in front of the LED light-emitting surface;
A dual barrier, comprising the first barrier (back) and the second barrier (front), the first barrier (back) placed in front of the heat shield, making the centers of the LED sub-pixels on the same levels laterally and longitudinally, the second barrier (front) placed ahead of the first barrier for the stereoscopic light splitting;
A protection layer placed ahead of the second barrier.

In one of the embodiments, the transparent areas of the pinholes array are circular, rectangular, square, rhombic or elliptic, and each center of the transparent areas of the pinholes array can overlap correspondingly with each LED sub-pixel, while the area is smaller than that of the light emitting area of the LED.

In one of the embodiments, the second barrier includes slit grating, cylindrical lens array, vibrating grating, liquid crystal (LC) grating and LC lens array.

In one of the embodiments, the protection layer is solid glass, hollow glass, acrylic transparent materials or low-E films.

To achieve the purposes mentioned above, this invention adopts the first proposal as follows:
1) Preparation of a LED panel;
2) Preparation of a heat shield;
3) Preparation of a dual barrier, where the first barrier and the second barrier are fabricated directly on the two surfaces of a transparent substrate;
4) Preparation of a protection layer;
5) Alignment and fixation of LED panel, heat shield, dual barrier, protection layer.

In one of the embodiments, the first barrier (pinholes array) is fabricated by coating opaque materials with holes array directly on a transparent substrate using screen printing; or by coating opaque materials on a transparent substrate using screen printing, thin film deposition, followed by photolithography and etching.

To achieve the purposes mentioned above, this invention adopts the second proposal as follows:
1) Preparation of a LED panel;
2) Preparation of a heat shield;
3) Preparation of a dual barrier, which is fabricated by bonding the first barrier and the second barrier on two surfaces of a transparent substrate;
4) Preparation of a protection layer;
5) Alignment and fixation of LED panel, heat shield, dual barrier, protection layer.

In one of the embodiments, the first barrier (pinholes array) is fabricated by machining the light transmission area on an opaque substrate; or by coating opaque materials with holes array directly on a transparent substrate using screen printing or laser printing; or by coating opaque materials on a transparent substrate using screen printing, thin film deposition, followed by photolithography and etching.

To achieve the purposes mentioned above, this invention adopts the third proposal as follows:
1) Preparation of a LED panel;
2) Preparation of a heat shield;
3) Preparation of a dual barrier, which is fabricated by bonding directly the first barrier and the second barrier together;
4) Preparation of a protection layer;
5) Alignment and fixation of LED panel, heat shield, dual barrier, protection layer.

In one of the embodiments, the first barrier (pinholes array) is fabricated by machining the light transmission area on an opaque substrate; or by coating opaque materials with holes array directly on a transparent substrate using screen printing or laser printing; or by coating opaque materials on a transparent substrate using screen printing, thin film deposition, followed by photolithography and etching.

This invention show great advantages the alignment difficulties of the LED sub-pixels or the LED units, at the same time, the fabrication is simple with low cost.

### Brief description of the drawings

Fig. 1 is the schematic configurations of the stereoscopic LED display with dual barrier presented in the first embodiments of this invention.
Fig. 2 is the schematic configurations of metal pinholes array (first barrier) presented in the first embodiments of this invention.
Fig. 3 is the schematic configurations of dual barrier presented in the first embodiments of this invention.
Fig. 4 is the schematic configurations of the stereoscopic LED display with dual barrier presented in the second embodiments of this invention.
Fig. 5 is the schematic configurations of metal pinholes array (first barrier) presented in the second embodiments of this invention.
Fig. 6 is the schematic configurations of metal slit grating (second barrier) presented in the second embodiments of this invention.
Fig. 7 is the schematic configurations of dual barrier presented in the second embodiments of this invention.
Fig. 8 is the schematic configurations of the stereoscopic LED display with dual barrier presented in the third embodiments of this invention.
Fig. 9 is the schematic configurations of plastic film pinholes array (first barrier) presented in the third embodiments of this invention.
Fig. 10 is the schematic configurations of cylindrical lens array (second barrier) presented in the third embodiments of this invention.
Fig. 11 is the schematic configurations of plastic film pinholes array (first barrier) fitted on a glass presented in the third embodiments of this invention.
Fig. 12 is the schematic configurations of dual barrier presented in the third embodiments of this invention.

### Detailed Description of the Invention

In the following, details of this invention are further described considering the figures and embodiments. This invention provides preferred embodiments, which should not be considered limited to the embodiments set forth. In the drawings, the layers and regions are enlarged for clarity, but as a scheme, they should not be considered as schematic strictly reflects the geometry of the proportional relationship.

In this invention, the drawings are schemes considering the embodiments ideal, thus the regions presented in the embodiments include the shape, but should not be considered limited to the shape. The drawings are schematic, while not to limit the range of this invention.

This invention provides a stereoscopic LED display with dual barrier, comprising:
A LED display panel;
A heat shield, placed in front of the LED light-emitting surface;
A dual barrier, comprising the first barrier (back) and the second barrier (front), the first barrier (back) placed in front of the heat shield, making the centers of the LED sub-pixels on the same levels laterally and longitudinally, the second barrier (front) placed ahead of the first barrier for the stereoscopic light splitting;
A protection layer placed ahead of the second barrier.

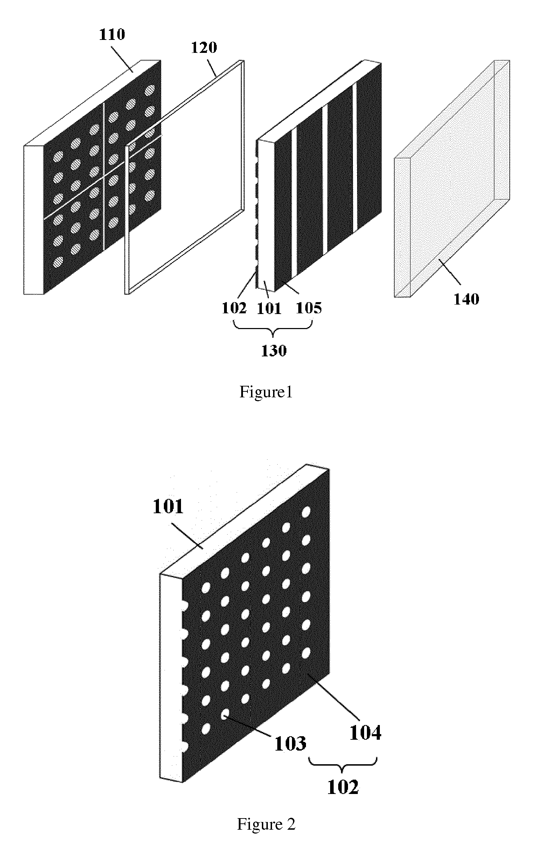

As shown in Fig. 1, the first embodiment of this invention provides a stereoscopic LED display with dual barrier, comprising:
A LED display panel 110;
A heat shield 120, whose materials include solid glass, hollow glass, acrylic transparent materials or low-E films. In this embodiment, the hollow glass is used as hot shield, and is placed between the first barrier and the LED panel 110.
A dual barrier 130, where the first barrier 102 and the second barrier 105 are fabricated directly on the two surfaces of a transparent substrate 101;

The first barrier 102 is a pinholes array, the transparent areas 103 of the pinholes array are circular, rectangular, square, rhombic or elliptic, and each center of the transparent areas of the pinholes array can overlap correspondingly with each LED sub-pixel, while the area is smaller than that of the light emitting area of the LED. The pinholes array 102 is fabricated by coating opaque materials with holes array directly on a transparent substrate. The materials transparent substrate include glass, poly (methyl methacrylate) (PMMA) or polyethylene terephthalateglycolester (PET); the opaque materials include photosensitive inks and printing ink, or thin films such as Cu, W, Co, Ni, Ta, TaN, Ti, Zn, Al, Cr, or their compounds. The pinholes array 102 is fabricated using screen printing; or by coating opaque materials on a transparent substrate using screen printing, thin film deposition, followed by photolithography and etching. In this embodiment, the pinholes array 102 is fabricated using metal deposition, followed by photolithography and etching.

The second barrier 105 is any barrier that can be used for the stereoscopic light splitting, in order to make the two eyes received different parallax images, the second barrier includes slit grating, cylindrical lens array, vibrating grating, liquid crystal (LC) grating and LC lens array. In this embodiment, the second barrier 105 for stereoscopic light splitting is slit grating, the second barrier 105 is fabricated by coating the opaque materials include photosensitive inks and printing ink, or thin films such as Cu, W, Co, Ni, Ta, TaN, Ti, Zn, Al, Cr, or their compounds, on a transparent substrate. In this embodiment, the second barrier 105 is fabricated by coating metal thin film on glass.

A protection layer 140, whose materials include solid glass, hollow glass, acrylic transparent materials or low-E films. In this embodiment, low-E films on glass is chosen for protection layer 140, and the protection layer 140 is placed in front of the second barrier 105.

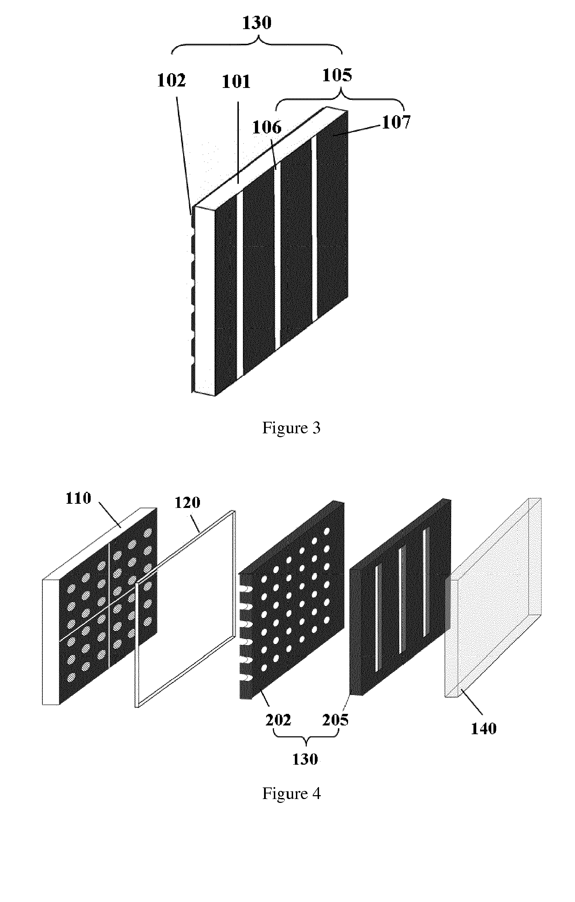

In order to make the technical staffs understand better this invention, we provide further details of the fabrication process by using embodiments, as shown in the figures. Fig. 1 is the schematic configurations of the stereoscopic LED display with dual barrier presented in the first embodiments of this invention. Fig. 2 is the schematic configurations of metal pinholes array (first barrier) presented in the first embodiments of this invention. Fig. 3 is the schematic configurations of dual barrier presented in the first embodiments of this invention. In the following, details of this invention are further described considering the figures.
**(S11)** Design of the dual barrier:
   **(S111)** Determination of the parameters of the LED panel 110, including the pixel, the diameter D₁ of each LED unit, the center distance between two adjoin sub-pixels D₂.
   **(S112)** Design of the metal thin film pinholes array 102, which is arranged in front of the LED panel, each center of the transparent areas of the pinholes array can overlap correspondingly with each LED sub-pixel, the diameters of the pinholes are the same, and is smaller than that of the light emitting area of the LED (D₁), and the center distance between two adjoin pinholes is equal to D₂. In this embodiment, the diameters of the pinholes are 0.9D₁, and the center distance between two adjoin pinholes is equal to that between two adjoin LED sub-pixels (D₂).
   **(S113)** Design of the second barrier 105, in this embodiment, the second barrier is slit grating, whose period b is determined by the sub-pixel of the LED, b=K X u X D₂/(u+ D₂), where K is the number of view point, D₂ is the center distance between two adjoin pinholes, which is equal to that between two adjoin LED sub-pixels, u is the distance between two eyes, which is generally taken as 65 mm. When the period of the slit grating is fixed, the brightness of the display can be enhanced by increasing the width of the slits. However, increasing the width of the slits might lead to a situation that the left eye may receive the right parallax images, the right eye may receive the left parallax images, thus decrease the stereoscopic areas. In order to balance the stereoscopic areas and the brightness, the ratio of the width of the slits and the opaque is 1:8.
   **(S114)** Determination of the thickness of the glass 110 between two barrier: the thickness d of the glass between the first barrier and the second barrier is determined by: d=s X D₂/(u+ D₂), where s is the best viewing distance, D₂ is the center distance between two adjoin pinholes, u is the distance between two eyes, which is generally taken as 65 mm.
   **(S115)** Determination of the relative position between the first barrier 105 and the second barrier 102: the relative position between the two barrier is simulated using Matlab software to obtain the best values, and marks are included in the mask files.
**(S12)** Fabrication of the dual barrier:
   **(S121)** Clean of the glass substrate 101: a glass with suitable size is ultrasonic cleaning in solution containing Win-10 and DI water (Win-10 : DI water = 3 : 97) for 15 min, then in DI water for 10min, the glass is then dried with N₂, and is put in an oven with temperature of 50°C for 30min.
   **(S122)** Printing of mask: the mask is printed using high resolution film printer according to the mask file. That is, the opaque area is coated with opaque ink, the shape of the transparent areas is circle.
   **(S123)** The fabrication of pinholes array 102: the surface of the clean glass is deposited with metal thin film, the materials of the metal can be Cu, W, Co, Ni, Ta, TaN, Ti, Zn, Al, Cr, or their compounds. In this embodiment, CrNi is deposited using magnetic control sputtering, the processes are listed as follows:
      **(S1231)** Spin coating of the photoresist: RZJ-304 is spinning coated on the glass with CrNi thin film, and is kept at the temperature of 110°C for 25 min.
      **(S1232)** Exposure: the photoresist from step S1231 is cooling down to romm temoerature, and is exposed under the UV light of 4.4mW/cm² for 11S.
      **(S1233)** Development: the sample after exposure is developed using 3% RZX-3038 developer, as RZJ-304 is positive photoresist, the exposed areas will be resolved, leaving the shape of pinholes array.
      **(S1234)** Wet etching: the exposure metal is etched in the solution containing 15-20g cerium nitrate, 5ml glacial acetic acid and 100ml water, at the temperature of 50°C.
      **(S1235)** Removal of the photoresist: the etched sample is dipped into acetone to remove the photoresist, leaving the metal pinholes array.
   **(S124)** Clean of the glass substrate 101 with pinholes array: the process is the same as step S121.
   **(S125)** Printing of slit grating mask: the mask is printed using high resolution film printer according to the mask file. That is, the opaque area is coated with opaque ink, the shape of the transparent areas is slit.
   **(S126)** The fabrication of slit grating 102: the surface of the clean glass (without pinholes array) is deposited with metal thin film, the materials of the metal can be Cu, W, Co, Ni, Ta, TaN, Ti, Zn, Al, Cr, or their compounds. In this embodiment, CrNi is deposited using magnetic control sputtering, the processes are listed as follows:
      **(S1261)** Spin coating of the photoresist: RZJ-304 is spinning coated on the both surfaces of glass, the process is the same as that in S1231.
      **(S1262)** Exposure: the mask of silt grating is aligned and put on the photoresist, the process is the same as that in S1232.
      **(S1263)** Development: the process is the same as that in S1233.
      **(S1264)** Wet etching: the process is the same as that in S1234.
      **(S1265)** Removal of the photoresist: the etched sample is dipped into acetone to remove the photoresist on both surfaces of substrate 108, leaving the dual barrier with metal pinholes array and slit grating 105.
(**S13**) The alignment and fixation of the dual barrier130, the LED panel 110, the hollow glass120 and the low-E glass 140: first, the dual barrier 130 and the LED panel 110 are alignment and fixed, with the pinholes array 102 closed to the hollow glass120; then the second barrier 105 of the dual barrier 130 is arranged to be closed to the low-E glass 140, each center of the transparent areas of the pinholes array can overlap correspondingly with each LED sub-pixel.

As shown in Fig. 4, the second embodiment of this invention provides a stereoscopic LED display with dual barrier, comprising:
A LED panel 110;
A heat shield 120, whose materials include solid glass, hollow glass, acrylic transparent materials or low-E films. In this embodiment, the hollow glass is used as hot shield, and is placed between the first barrier and the LED panel 110.;

A dual barrier 130, which is fabricated by bonding directly the first barrier 202 and the second barrier 205 together.

The first barrier 202 is a pinholes array, the transparent areas 203 of the pinholes array are circular, rectangular, square, rhombic or elliptic, and each center of the transparent areas of the pinholes array can overlap correspondingly with each LED sub-pixel, while the area is smaller than that of the light emitting area of the LED.

The pinholes array 102 is fabricated by machining transparent areas on opaque materials, or by coating the opaque materials on a transparent substrate. The opaque materials include photosensitive inks and printing ink, or thin films such as Cu, W, Co, Ni, Ta, TaN, Ti, Zn, Al, Cr, or their compounds. In this embodiment, the pinholes array 202 is fabricated by machining circle holes on a Al substrate 202 using laser processing.

The second barrier 205 is any barrier that can be used for the stereoscopic light splitting, in order to make the two eyes received different parallax images, the second barrier includes slit grating, cylindrical lens array, vibrating grating, liquid crystal (LC) grating and LC lens array. In this embodiment, the second barrier 205 for stereoscopic light splitting is slit grating.

The second barrier 205 is fabricated by machining transparent areas on opaque materials, or by coating the opaque materials on a transparent substrate. The opaque materials include photosensitive inks and printing ink, or thin films such as Cu, W, Co, Ni, Ta, TaN, Ti, Zn, Al, Cr, or their compounds. In this embodiment, the second barrier 205 is fabricated by machining circle holes on a Al substrate 202 using laser processing.

A protection layer 140, whose materials include solid glass, hollow glass, acrylic transparent materials or low-E films. In this embodiment, low-E films on glass is chosen for protection layer 140, and the protection layer 140 is placed in front of the second barrier 205.

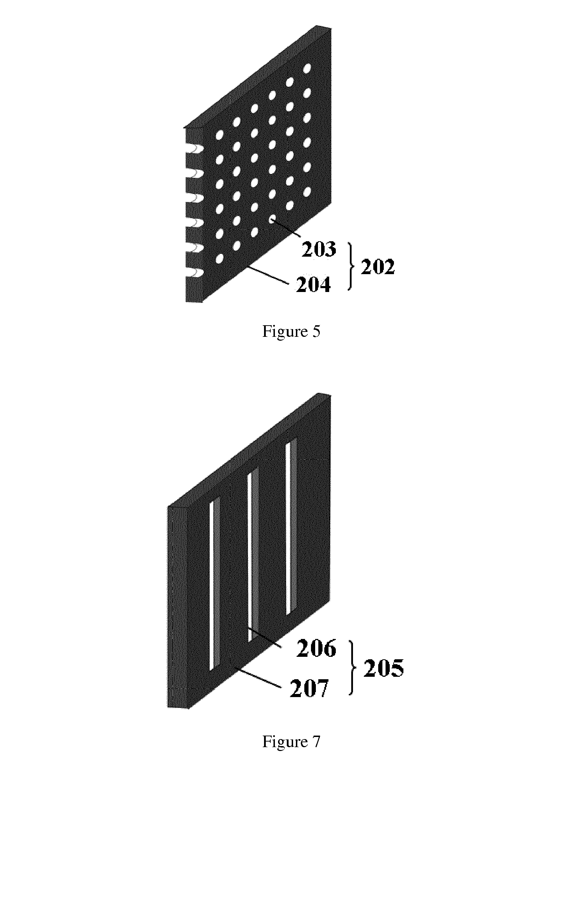

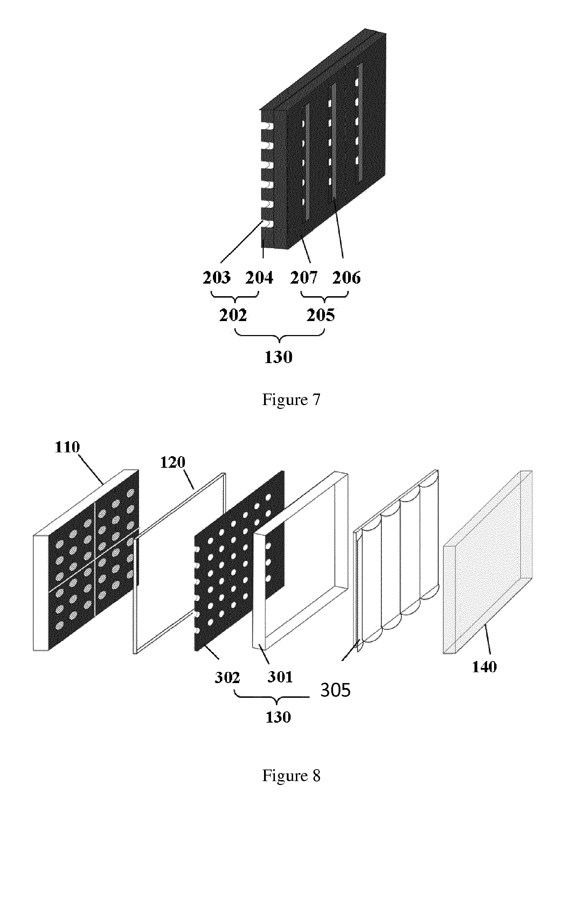

In order to make the technical staffs understand better this invention, we provide further details of the fabrication process by using embodiments, as shown in the figures. Fig. 4 is the schematic configurations of the stereoscopic LED display with dual barrier presented in the second embodiments of this invention. Fig. 5 is the schematic configurations of metal pinholes array (first barrier) presented in the second embodiments of this invention. Fig. 6 is the schematic configurations of metal slit grating (second barrier) presented in the second embodiments of this invention. Fig. 7 is the schematic configurations of dual barrier presented in the second embodiments of this invention. In the following, details of this invention are further described considering the figures.
**(S21)** Design of the dual barrier 130:
   **(S211)** Determination of the parameters of the LED panel 110, including the pixel, the diameter D₁ of each LED unit, the center distance between two adjoin sub-pixels D₂.
   **(S212)** Design of the metal thin film pinholes array 102, which is arranged in front of the LED panel, each center of the transparent areas of the pinholes array can overlap correspondingly with each LED sub-pixel, the diameters of the pinholes are the same, and is smaller than that of the light emitting area of the LED (D₁), and the center distance between two adjoin pinholes is equal to D₂. In this embodiment, the diameters of the pinholes are 0.9D₁, and the center distance between two adjoin pinholes is equal to that between two adjoin LED sub-pixels (D₂).
   **(S213)** Design of the second barrier 205, in this embodiment, the second barrier is slit grating, whose period b is determined by the sub-pixel of the LED, b=K X u X D₂/(u+ D₂), where K is the number of view point, D₂ is the center distance between two adjoin pinholes, which is equal to that between two adjoin LED sub-pixels, u is the distance between two eyes, which is generally taken as 65 mm. When the period of the slit grating is fixed, the brightness of the display can be enhanced by increasing the width of the slits. However, increasing the width of the slits might lead to a situation that the left eye may receive the right parallax images, the right eye may receive the left parallax images, thus decrease the stereoscopic areas. In order to balance the stereoscopic areas and the brightness, the ratio of the width of the slits and the opaque is 1:8.
   **(S214)** Determination of the thickness of the glass 110 between two barrier: the thickness d of the glass between the first barrier and the second barrier is determined by: d=s X D₂/(u+ D₂), where s is the best viewing distance, D₂ is the center distance between two adjoin pinholes, u is the distance between two eyes, which is generally taken as 65 mm.
   **(S115)** Determination of the relative position between the first barrier 205 and the second barrier 202: the relative position between the two barrier is simulated using Matlab software to obtain the best values, and marks are included in the mask files.
**(S22)** Fabrication of the dual barrier130:
   (**S221**) The fabrication of pinholes array 202: the pinholes array 202 is fabricated by machining circle holes on a Al substrate using laser processing, forming the transparent areas 203 and opaque areas 204.
   **(S222)** The fabrication of slit grating 205: the pinholes array 202 is fabricated by machining transparent areas on a Al substrate using laser processing, forming the transparent areas 206 and opaque areas 207.
   **(S223)** The alignment and fixation of the pinholes array 202 and the slit grating 205.
**(S23)** The alignment and fixation of the dual barrier130, the LED panel 110, the hollow glass120 and the low-E glass 140: first, the dual barrier 130 and the LED panel 110 are alignment and fixed, with the pinholes array 102 closed to the hollow glass 120; then the second barrier205 of the dual barrier 130 is arranged to be closed to the low-E glass 140, each center of the transparent areas of the pinholes array can overlap correspondingly with each LED sub-pixel.

As shown in Fig. 8, the third embodiment of this invention provides a stereoscopic LED display with dual barrier, comprising:
A LED display panel 110;
A heat shield 120, whose materials include solid glass, hollow glass, acrylic transparent materials or low-E films. In this embodiment, the hollow glass is used as hot shield, and is placed between the first barrier 302 and the LED panel 110. A dual barrier 130, which is fabricated by bonding the first barrier 302 and the second barrier 305 on two surfaces of a transparent substrate;

The first barrier 302 is a pinholes array, the transparent areas 303 of the pinholes array are circular, rectangular, square, rhombic or elliptic, and each center of the transparent areas of the pinholes array can overlap correspondingly with each LED sub-pixel, while the area is smaller than that of the light emitting area of the LED.

The pinholes array 302 is fabricated by coating opaque materials with holes array directly on a transparent substrate. The materials transparent substrate include glass, poly (methyl methacrylate) (PMMA) or polyethylene terephthalateglycolester (PET); the opaque materials include photosensitive inks and printing ink, or thin films such as Cu, W, Co, Ni, Ta, TaN, Ti, Zn, Al, Cr, or their compounds. The pinholes array 102 is fabricated using screen printing; or by coating opaque materials on a transparent substrate using screen printing, thin film deposition, followed by photolithography and etching. In this embodiment, the pinholes array 302 is fabricated by bonding thin plastic film using laser printing on a PET transparent substrate.

The second barrier 305 is any barrier that can be used for the stereoscopic light splitting, in order to make the two eyes received different parallax images, the second barrier includes slit grating, cylindrical lens array, vibrating grating, liquid crystal (LC) grating and LC lens array. In this embodiment, the second barrier 105 for stereoscopic light splitting is cylindrical lens array.

A protection layer 140, whose materials include solid glass, hollow glass, acrylic transparent materials or low-E films. In this embodiment, low-E films on glass is chosen for protection layer 140, and the protection layer 140 is placed in front of the second barrier 305.

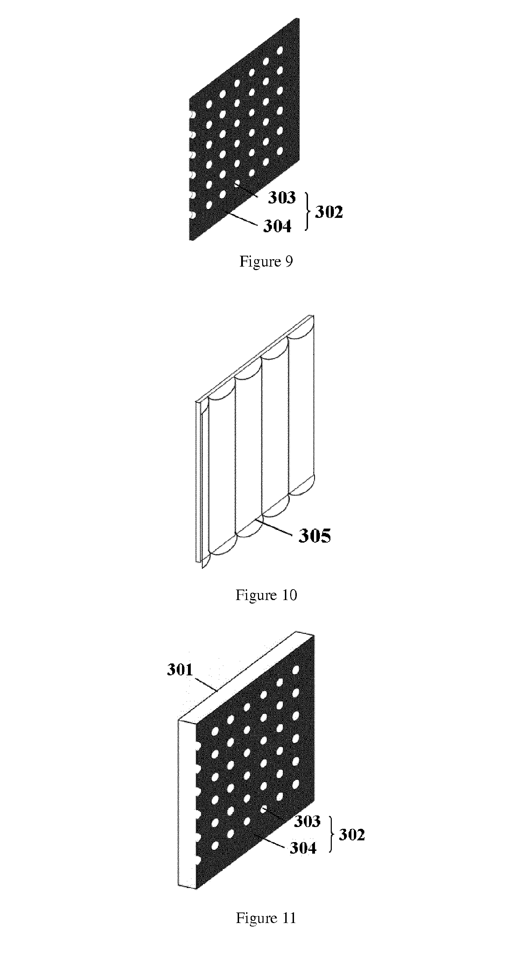

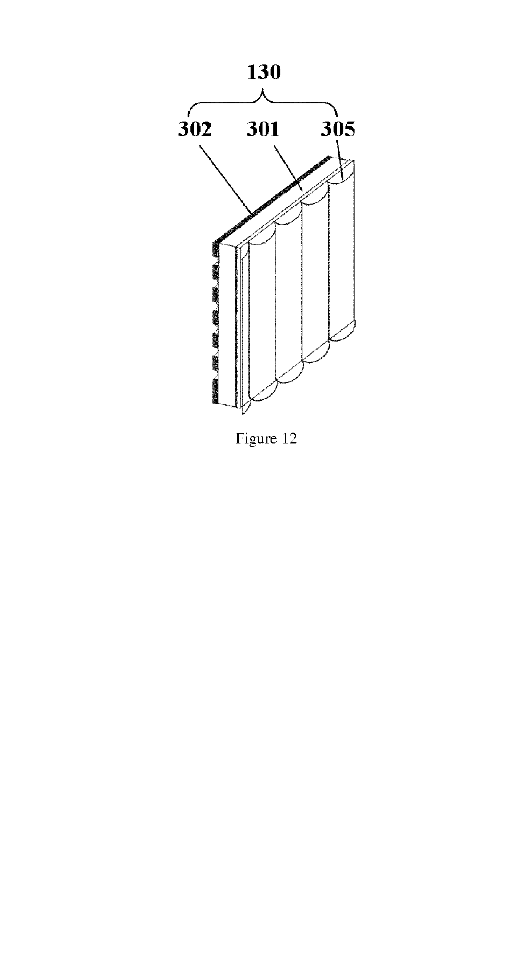

In order to make the technical staffs understand better this invention, we provide further details of the fabrication process by using embodiments, as shown in the figures. Fig. 8 is the schematic configurations of the stereoscopic LED display with dual barrier presented in the third embodiments of this invention. Fig. 9 is the schematic configurations of metal pinholes array (first barrier) presented in the third embodiments of this invention. Fig. 10 is the schematic configurations of cylindrical lens array (second barrier) presented in the third embodiments of this invention. Fig. 11 is the schematic configurations of plastic film pinholes array (first barrier) fitted on a glass presented in the third embodiments of this invention. Fig. 12 is the schematic configurations of dual barrier presented in the first embodiments of this invention. In the following, details of this invention are further described considering the figures.
**(S31)** Design of the dual barrier:
   **(S311)** Determination of the parameters of the LED panel 110, including the pixel, the diameter D₁ of each LED unit, the center distance between two adjoin sub-pixels D₂.
   **(S312)** Design of the plastic thin film pinholes array 302, which is arranged in front of the LED panel, each center of the transparent areas of the pinholes array can overlap correspondingly with each LED sub-pixel, the diameters of the pinholes are the same, and is smaller than that of the light emitting area of the LED (D₁), and the center distance between two adjoin pinholes is equal to D₂. In this embodiment, the diameters of the pinholes are 0.9D₁, and the center distance between two adjoin pinholes is equal to that between two adjoin LED sub-pixels (D₂).
   **(S313)** Design of the second barrier 305, in this embodiment, the second barrier is cylindrical lens array, whose period r is determined by r= D₂×s× (n-1)/u and thickness d₂= n×r/(n-1)-n×d, where K is the number of view point, D₂ is the center distance between two adjoin pinholes, which is equal to that between two adjoin LED sub-pixels, u is the distance between two eyes, which is generally taken as 65 mm, d is the thickness of glass substrate, n is the index of refraction of cylindrical lens array.
   **(S314)** Determination of the thickness of the glass 301 between two barrier: the images of the LED panel, i.e. bonding surface of the first barrier 302 and the glass substrate 301, should be located at the focal plane of the cylindrical lens, so thickness of the glass 301 should be less than focal length of the cylindrical lens, that is, d<f, where f= r/(n-1).
   **(S315)** Determination of the relative position between the first barrier 305 and the second barrier 302: the relative position between the two barrier is simulated using Matlab software to obtain the best values, and marks are included in the mask files.
**(S32)** Fabrication of the dual barrier:
   **(S121)** Fabrication of plastic film pinholes array 302: the pinholes array 302 is printed using high resolution film printer according to the mask file. That is, the opaque area is coated with opaque ink on PET substrate, the shape of the transparent areas is circle.
   **(S322)** Clean of the glass substrate 301: a glass with suitable size is ultrasonic cleaning in solution containing Win-10 and DI water (Win-10 : DI water = 3 : 97) for 15 min, then in DI water for 10min, the glass is then dried with N₂, and is put in an oven with temperature of 50°C for 30min.
   **(S323)** The fixation of pinholes array 302: the surface of the clean glass is deposited with UV sensitive resist of 1 µ m thick, the plastic pinholes array is cut with the size the same as that of the glass, and is tiled on the UV sensitive resist, then is passed on the UV light with the wave length of 365nm, and irradiance of 7mW/cm² for10 min.
   **(S324)** The fixation of cylindrical lens array 305: the surface of the clean glass is deposited with UV sensitive resist of 1 µ m thick, the cylindrical lens array 305 is cut with the size the same as that of the glass, and is tiled on the UV sensitive resist, then passed on the UV light with the wave length of 365nm, and irradiance of 7mW/cm² for10 min.
**(S33)** The alignment and fixation of the dual barrier130, the LED panel 110, the hollow glass120 and the low-E glass 140: first, the dual barrier 130 and the LED panel 110 are alignment and fixed, with the pinholes array 302 closed to the hollow glass 120; then the second barrier305 of the dual barrier 130 is arranged to be closed to the low-E glass 140, each center of the transparent areas of the pinholes array can overlap correspondingly with each LED sub-pixel.

In summary, this invention presents a stereoscopic LED display with dual barrier and its fabrication, providing an effective solution for the alignment problem of the LED by controlling the positions of the first barrier and the second barrier, which is favorable for the realization of large scale, high brightness naked LED 3D display, furthermore, this method is simple, low-cost.

Although the present invention has been described with respect to the foregoing preferred embodiments, it should be understood that various other changes, omissions and deviations in the form and detail thereof may be made without departing from the scope of this invention.

## Claims

1. A stereoscopic LED display with dual barrier, comprising:
A LED display panel;
A heat shield, placed in front of the LED light-emitting surface;
A dual barrier, comprising the first barrier (back) and the second barrier (front),
the first barrier (back) placed in front of the heat shield, making the centers of the LED sub-pixels on the same levels laterally and longitudinally, the second barrier (front) placed ahead of the first barrier for the stereoscopic light splitting;
A protection layer placed ahead of the second barrier.

2. The stereoscopic LED display with dual barriers according to claim 1, wherein, the first barrier is pinholes array, the transparent areas of the pinholes array are circular, rectangular, square, rhombic or elliptic, and each center of the transparent areas of the pinholes array can overlap correspondingly with each LED sub-pixel, while the area is small than that of the light emitting area of the LED, the distance between two adjacent pinholes is equal to that of between two adjacent LED sub-pixels.

3. The stereoscopic LED display with dual barriers according to claim 2, wherein, the pinholes array is fabricated by machining the light transmission area on steel plate, aluminum plate, nickel plate, chromium plate, chromium steel plate, tantalum plate or titanium plate.

4. The stereoscopic LED display with dual barriers according to claim 2, wherein, the pinholes array is fabricated by coating opaque materials on a transparent substrate, including glass, poly (methyl methacrylate) (PMMA) or polyethylene terephthalateglycolester (PET), the opaque materials include photosensitive inks and printing ink, or thin films such as Cu, W, Co, Ni, Ta, TaN, Ti, Zn, Al, Cr, or their compounds.

5. The stereoscopic LED display with dual barriers according to claim 1, wherein, the second barrier includes slit grating (parallax barrier), cylindrical lens array, vibrating grating, switching liquid crystal (LC) grating and LC lens array.

6. The stereoscopic LED display with dual barriers according to claim 1, wherein, the transparent heat shield is solid glass, hollow glass, acrylic transparent materials or low-E films.

7. The stereoscopic LED display with dual barriers according to claim 1, wherein, the protection layer is solid glass, hollow glass, acrylic transparent materials or low-E films.

8. A stereoscopic LED display with dual barriers, wherein, the fabrication processes comprise of:
1) Preparation of a LED panel;
2) Preparation of a heat shield;
3) Preparation of a dual barrier, where the first barrier and the second barrier are fabricated directly on the two surfaces of a transparent substrate;
4) Preparation of a protection layer;
5) Alignment and fixation of LED panel, heat shield, dual barrier, protection layer.

9. The fabrication processes of the stereoscopic LED display with dual barriers according to claim 8, wherein, the first barrier (pinholes array) is fabricated by coating opaque materials with holes array directly on a transparent substrate using screen printing; or by coating opaque materials on a transparent substrate using screen printing, thin film deposition, followed by photolithography and etching.

10. A stereoscopic LED display with dual barriers, wherein, the fabrication processes comprise of:
1) Preparation of a LED panel;
2) Preparation of a heat shield;
3) Preparation of a dual barrier, which are fabricated by bonding the first barrier and the second barrier on two surfaces of a transparent substrate;
4) Preparation of a protection layer;
5) Alignment and fixation of LED panel, heat shield, dual barrier, protection layer.

11. The fabrication processes of the stereoscopic LED display with dual barriers according to claim 10, wherein, the first barrier (pinholes array) is fabricated by machining the light transmission area on an opaque substrate; or by coating opaque materials with holes array directly on a transparent substrate using screen printing or laser printing; or by coating opaque materials on a transparent substrate using screen printing, thin film deposition, followed by photolithography and etching.

12. A stereoscopic LED display with dual barriers, wherein, the fabrication processes comprise of:
1) Preparation of a LED panel;
2) Preparation of a heat shield;
3) Preparation of a dual barrier, which are fabricated by bonding directly the first barrier and the second barrier together;
4) Preparation of a protection layer;
5) Alignment and fixation of LED panel, heat shield, dual barrier, protection layer.

13. The fabrication processes of the stereoscopic LED display with dual barriers according to claim 12, wherein, the first barrier (pinholes array) is fabricated by machining the light transmission area on an opaque substrate; or by coating opaque materials with holes array directly on a transparent substrate using screen printing or laser printing; or by coating opaque materials on a transparent substrate using screen printing, thin film deposition, followed by photolithography and etching.
